(19) Europäisches Patentamt

European Patent Office

Office européen des brevets

(11) **EP 4 209 768 A1**

(12) # EUROPEAN PATENT APPLICATION
published in accordance with Art. 153(4) EPC

(43) Date of publication:
**12.07.2023 Bulletin 2023/28**

(21) Application number: **20952615.1**

(22) Date of filing: **27.11.2020**

(51) International Patent Classification (IPC):
$G01M\ 15/04^{(2006.01)}$     $G01M\ 15/12^{(2006.01)}$

(86) International application number:
**PCT/RU2020/000637**

(87) International publication number:
**WO 2022/050863 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2020   RU 2020128924**

(71) Applicants:
• **Joint Stock Company "Rosenergoatom"
Moscow 109507 (RU)**
• **NATIONAL RESEARCH NUCLEAR UNIVERSITY MEPHI
(Moscow Engineering Physics Institute)
Moscow 115409 (RU)**

• **Science and Innovations - Nuclear Industry Scientific Development, Private Enterprise
Moscow, 119017 (RU)**

(72) Inventors:
• **ABIDOVA, Elena Aleksandrovna
Volgodonsk, 347360 (RU)**
• **GORBUNOV, Igor Gennadevich
Solnechnyi, 347358 (RU)**
• **NIKIFOROV, Viktor Nikolaevich
Volgodonsk, 347380 (RU)**
• **PUGACHEVA, Olga Yur'evna
Volgodonsk, 347360 (RU)**
• **SOLOV'EV, Viktor Ivanovich
Volgodonsk, 347375 (RU)**

(74) Representative: **Osmans, Voldemars et al
Agency Tria Robit
P.O. Box 22
LV-1010 Riga (LV)**

(54) **METHOD FOR MONITORING THE TECHNICAL CONDITION OF A DIESEL GENERATOR WHEN IN OPERATION**

(57)     The invention relates to technical diagnostics. The claimed method consists in measuring of vibration acceleration in three mutually orthogonal planes with the use of vibration sensors mounted at the monitoring points on a diesel generator. Vibration accelerations are measured at the monitoring points on an operational and knowingly fault-free diesel generator, and then vibration accelerations are measured at the monitoring points of a diesel generator in the course of its operation with prescribed intervals. Temperature and intensity of an ultrasonic signal are additionally measured at the same monitoring points, and the root mean square values of the ultrasonic signal intensity, temperature and vibration acceleration are determined. On the basis of the measured vibration acceleration values the root mean square values of vibration velocity and vibratory displacement are calculated, the distances between clusters of preceding measurements are determined, and a conclusion on the operating state of the diesel generator is made. The technical result consists in allowing the timely detection of any operating defects in a diesel generator by performance of periodic measurements and comparison of the obtained calculation results with each other, thus also providing for safety of the process equipment in plants.

EP 4 209 768 A1

**Description**

The invention relates to technical diagnostics, particularly to methods for determining the technical condition of an object, mainly reciprocating equipment, including diesel generators, and may be used for monitoring of electrically driven equipment and diesel generators, refueling machines, drives of control and protection systems at nuclear power plants, for diagnostics, monitoring of parameters, processing and presentation of the monitoring results, issuance of recommendations and instructions on repair of diesel generator units.

Methods and devices for using of the vibration data in order to determine the condition of a process controller are known (Russian utility patent No. 2640387). According to this method, the vibration data are used to determine the condition of a process controller in the course of calibration, in this case the operational limit is calculated for the controller based on the primary vibration data, and the operation data in relation to the controller are collected. The operation data indicate the service life associated with the controller. Then the operational limit is updated on the basis of the above-mentioned operation data. The updated operational limit indicates reduction of the remaining service live associated with the controller. Then the secondary vibration data from the first sensor are collected subsequent to calibration of the vibration monitoring circuit, and the condition of the controller is determined if the secondary vibration data exceed the updated operational limit. The problem of any process control within the framework of classic technology on the basis of a sequence of actions and methods for data transmission from a sensor to a receiver is solved in the known invention as well as in the described analogues of the known method.

The known method does not enable to perform vibration diagnostics of any diesel generator components in the course of its operation and assess the need for any maintenance.

The method for monitoring the technical condition of a ship service diesel generator (Russian utility patent No. 2682839), including measurement and processing of a vibration signal in the vertical, axial and transverse directions, the values of vibration acceleration, vibration velocity and vibratory displacement from the sensors installed on the turbo compressor housing, on the components of the blow-off and gas intake systems of the engine and the crank shaft of the engine, on the engine bearer feet, on the generator bearing housing and the generator bearer feet, on the diesel generator supports and foundation, subsequent conversion of the measured signal into narrow-band spectra of vibration acceleration, vibration velocity, vibratory displacement and determination of the point where the vibration parameters exceed the established operational limits, is the closest analogue of the claimed technical solution.

Absence of any possibility to assess the condition of a diesel generator by determining the trend of the monitored parameters is a drawback of the closest analogue.

The objective achieved by the proposed invention is to determine the technical condition of a diesel generator in order to analyze the possibility for its further operation without any repairs and also to enhance effectiveness of early fault detection for diesel generator units by combined analysis of the diagnostic data of various nature with due regard for the previously recorded data for this type of equipment.

The technical result achieved by this invention includes provision of the possibility for timely detection of any malfunctions of a diesel generator by periodic measurements and comparison of the obtained calculation results with each other, and consequently assurance of industrial safety for the process equipment of plants.

The essence of the invention is that according to the method for monitoring of the technical condition of a diesel generator when in operation, involving measurement of the vibration acceleration values at three mutually orthogonal planes with the use of vibration sensors installed at monitoring points on the diesel generator, it is proposed to perform primary measurements of the vibration acceleration values preliminarily at the monitoring points of a knowingly fault-free operational diesel generator, and then to perform subsequent measurements of the vibration acceleration values at the monitoring points on the diesel generator in the course of its operation with the prescribed intervals, with additional measurement of temperature and intensity of an ultrasonic signal at the same monitoring points and determination of the root mean square values of the ultrasonic signal intensity, temperature and vibration acceleration, and also to calculate the root mean square values of vibration velocity and vibratory displacement on the basis of the measured values, to present the obtained values in the form of matrices, then to normalize the obtained root mean square values, to perform calculation of the co-variation matrices and their singular decomposition in order to determine the eigenvectors and the eigenvalues, then to project the obtained data on the eigenvector components with formation of clusters corresponding to the measurements at each point within the space of eigenvector components, then to determine the specified interval formed as the range of distance between the previous measurement clusters, and to make a conclusion on absence of any faults in the diesel generator if more than 50% of the current measurement clusters fall within the specified interval, or presence of any malfunctions of the diesel generator if less than 50% of the current measurement clusters fall within the specified interval, or presence of any fault in the diesel generator if more than 50% of clusters are below the specified interval limits.

It is also proposed to select the monitoring points of the diesel generator for installation of vibration sensors on the diesel supports and fastening points, on the diesel case and in the areas close to location of the diesel supports, turbo compressors, water and oil pumps as well as on the generator supports and frame and its bearing blocks.

It is proposed to select additional monitoring points for measurement of the ultrasonic signal intensity mainly on the cylinders and their high-pressure fuel pumps, the anchor ties of base bearings, the cam shaft sleeve-type bearings, the generator, the water and oil pumps.

It is proposed to select additional monitoring points for temperature measurement on the generator bearing, the exhaust nozzles of the cylinders, the high-pressure fuel pumps, the inspection hatches, housings of the diesel cooling water pump, the boost air cooling water pump, the oil pump and the generator.

It is also proposed to measure temperature with the use of a thermal imager, and to measure the values of vibration acceleration, temperature and ultrasonic signal intensity with the frequency of once per 3 months.

The proposed method is embodied as follows.

First of all, primary measurements of vibration acceleration is performed on a knowingly fault-free operational diesel generator in three mutually orthogonal planes with the use of vibration sensors, and the values of temperature and ultrasonic signal intensity are also measured.

The results of these measurements must be recorded as subsequently obtained measurement results will be compared with them.

Vibration sensors are installed on the diesel generator at the monitoring points, for example, on the diesel supports and fastening points, on the diesel case and in the areas close to location of the diesel supports, turbo compressors, water and oil pumps as well as on the generator supports and frame and its bearing blocks. For example, sensors of VS-3D type may be used as wireless three-dimensional sensors. During installation of the sensors, presence of the signal should be verified, and recording should be performed for at least one second.

The proposed method also provides for monitoring of detachable equipment: turbo compressors, water and oil pumps at the points on the case close to the locations of bearings.

In-line arrangement of diesels provides for location of cylinders in a row (15D-100, AS-803 and AS-808) or two rows (ASD-5600, DG-4000). The bearings of the upper and lower crank shafts may be monitored on the engine case within the area where the main bearings are located along the right and left side. Direct monitoring of the high-pressure fuel pump, nozzles and cylinders through the sight glasses is possible in the course of diagnostics.

Generators included into a diesel generator unit are synchronous machines consisting of a static stator and a rotor rotating on sleeve-type bearings. As in all synchronous machines, the rotor represents an electric magnet supplied with direct current via a commutator. Operability of an electric machine is primarily determined by the condition of the stator windings and bearings. Problems with supply of the rotor via a commutator which also need to be monitored often occur during operation of synchronous machines.

Vibration monitoring is intended for general inspection of the equipment from the viewpoint of the possibility for its operation. Vibration monitoring of the vibration level at the monitoring points with subsequent comparison of the vibration parameters with their standard values determined for the equipment of this particular design enables to make a conclusion on the possibility for further operation of the unit. Vibration signals are sensitive not only to local oscillatory processes in the monitored equipment but also to all processes in the equipment (a composite parameter).

Temperature monitoring of the diesel enables timely detection of any defects in the fuel injection equipment preventing from the required diesel operating process. Monitoring provides the possibility for prompt restoration of the required power-related, economic and environmental characteristics of a diesel. Besides, in-process monitoring of fuel injection equipment components enables to assess the repair quality and to implement the relevant measures in case of necessity to improve the technical condition of a diesel. Monitoring of the temperature of cylinder exhaust nozzles or temperature of exhaust gases, temperature of the working media, the maximum combustion pressure in each cylinder characterize operation uniformity of the cylinders and efficient operation of a diesel as a whole. The temperature condition monitoring for the diesel frame and its basic units enables to identify any areas with drastic changes of the temperature pattern, which is obviously due to increased resistance (friction) in the mated assemblies and parts of a diesel.

Temperature is measured with the use of a thermal imager, for example, Testo 890-2, by pointing to the installation areas of the generator bearings, exhaust nozzles of the cylinders, high-pressure fuel pumps, inspection hatches, housings of the diesel cooling water pump, the boost air cooling water pump, the oil pump and the generator, with subsequent manual or automatic focusing and saving of the thermography scan in the memory of the device. Heat monitoring of the crank shaft bearings of V-shaped and in-line diesels may be sufficiently performed according to the temperature of sight glasses washed with the oil supplied for lubrication of the crank shaft bearings.

The ultrasonic signal intensity is measured on the cylinders and their high-pressure fuel pumps, the anchor ties of base bearings, the cam shaft sleeve-type bearings, the generator, the water and oil pumps. Recording is arranged by installation of the contact caliper of an SDT-270 ultrasonic device at the monitoring points.

All vibrations occurring in the crank gear of diesels with V-shaped arrangement of cylinders (diesel generator units of 12ZV40/48+S2445-12, ZVEZDA-6000BC-MTU types) are taken up by the engine case. The crank shaft is placed in the covers of the base bearings attached to the engine case with the use of pins, and transverse anchor ties are arranged within the plane of each base bearing in order to increase stiffness of the lower engine case section. Cam shafts of the valve gear assembly are located along the left and right side of the engine case. Ultrasonic testing of the crank shaft bearings may be performed from one side which is convenient to do via the anchor ties taking up the loads from the crank shaft base bearings. Ultrasonic parameters of the cam shaft bearings along the left and right side can be monitored only on the engine case (frame). The design of V-shaped diesels enables ultrasonic testing of each high-pressure fuel pump and cylinder bushings located along the left and right side.

After completion of the primary measurements, subsequent measurement of vibration acceleration, temperature and ultrasonic signal intensity are performed at the same monitoring points of the diesel generator in the course of its operation with the intervals determined by the operating organization regulations, for example, once per three months.

The time for vibration recording at each monitoring point is determined by the rated rotation frequency of the diesel shaft. The number of revolutions within the recording period must be at least 10 for credible monitoring of any structural component. The recommended recording period is 1 second.

Monitoring is performed during the equipment operation at the rated power. Simultaneous recording of two or three technical condition parameters corresponding to the standard equipment groups enables to have a comprehensive assessment by presentation of the data in the n-dimensional area, calculation of the data cluster centers and the center-to-center distance. The distance between the data samples recorded at different time represents a composite index of the equipment condition change.

After completion of the above-mentioned measurements the root mean square values of the ultrasonic signal intensity, temperature and vibration acceleration are calculated. Then the root mean square values of vibration velocity and vibratory displacement are calculated on the basis of the measured vibration acceleration values.

The obtained values are represented in the form of matrices, for example:

$$
A = \begin{bmatrix}
V_{RMS_1}^{X}{}^{1} & V_{MAX_1}^{X}{}^{1} & V_{RMS_1}^{Y}{}^{1} & V_{MAX_1}^{Y}{}^{1} & V_{RMS_1}^{Z}{}^{1} & V_{MAX_1}^{Z}{}^{1} \\
\vdots & & & & & \\
V_{RMS_1}^{X}{}^{i} & V_{MAX_1}^{X}{}^{i} & V_{RMS_1}^{Y}{}^{i} & V_{MAX_1}^{Y}{}^{i} & V_{RMS_1}^{Z}{}^{i} & V_{MAX_1}^{Z}{}^{i} \\
\vdots & & & & & \\
V_{RMS_1}^{X}{}^{K} & V_{MAX_1}^{X}{}^{K} & V_{RMS_1}^{Y}{}^{K} & V_{MAX_1}^{Y}{}^{K} & V_{RMS_1}^{Z}{}^{K} & V_{MAX_1}^{Z}{}^{K} \\
& & & \ddots & & \\
V_{RMS_L}^{X}{}^{1} & V_{MAX_L}^{X}{}^{1} & V_{RMS_L}^{Y}{}^{1} & V_{MAX_L}^{Y}{}^{1} & V_{RMS_L}^{Z}{}^{1} & V_{MAX_L}^{Z}{}^{1} \\
\vdots & & & & & \\
V_{RMS_L}^{X}{}^{i} & V_{MAX_L}^{X}{}^{i} & V_{RMS_L}^{Y}{}^{i} & V_{MAX_L}^{Y}{}^{i} & V_{RMS_L}^{Z}{}^{i} & V_{MAX_L}^{Z}{}^{i} \\
\vdots & & & & & \\
V_{RMS_L}^{X}{}^{K} & V_{MAX_L}^{X}{}^{K} & V_{RMS_L}^{Y}{}^{K} & V_{MAX_L}^{Y}{}^{K} & V_{RMS_L}^{Z}{}^{K} & V_{MAX_L}^{Z}{}^{K}
\end{bmatrix},
$$

Where $\left\{ V_{RMS_j}^{X}{}^{i} \quad V_{MAX_j}^{X}{}^{i} \quad V_{RMS_j}^{Y}{}^{i} \quad V_{MAX_j}^{Y}{}^{i} \quad V_{RMS_j}^{Z}{}^{i} \quad V_{MAX_j}^{Z}{}^{i} \right\}$ are the root mean square values and the maximum values of vibration velocity in three mutually orthogonal planes recorded several times at the same points on the equipment, where K is the number of measurements and L is the number of points.

The values of temperature and ultrasonic signal intensity are represented in the form of similar matrices.

Then the parameters are normalized (so that the probabilistic average in each column corresponds to zero, and dispersion - to one), and the co-variation matrices are calculated:

$$
C_A = \frac{AA^T}{L}.
$$

The co-variation matrix is decomposed with the use of singular decomposition in order to obtain eigenvectors and eigenvalues

$$
C_A U_n = \lambda_n U_n \,,
$$

where $U_n$ are eigenvectors (the maximum dispersion directions); $\lambda_n$ is the eigenvalue (the dispersion fraction of the parameter in the relevant vector direction).

Then the obtained data are projected on the eigenvector components with formation of the clusters corresponding to the measurements at each point within the space of eigenvector components. Then the specified interval formed as the range of distance between the previous measurement clusters is determined, and a conclusion is made on absence of any faults in the diesel generator if more than 50% of the current measurement clusters fall within the specified interval, or presence of any malfunctions of the diesel generator if less than 50% of the current measurement clusters fall within the specified interval, or presence of any fault in the diesel generator if more than 50% of clusters are below the specified interval limits.

The described method has been applied in diagnostics of diesel generator units of 15D-100, 12ZV40/48+S2445-12, ZVEZDA 6000BC-MTU types operated at Novovoronezh, Smolensk and Rostov NPPs and can be used for diagnostics of diesel generator units of ASD-5600, DG-4000, AS-803 and AS-808 types operated at other NPPs.

Application of the described method enables to determine the technical condition of a diesel generator promptly and to identify any malfunctions in a timely manner.

**Claims**

1. A method for monitoring the technical condition of a diesel generator when in operation, involving measurement of the vibration acceleration values at three mutually orthogonal planes with the use of vibration sensors installed at monitoring points on the diesel generator, **characterized in that** primary measurements of the vibration acceleration values are preliminarily performed at the monitoring points of a knowingly fault-free operational diesel generator, and then subsequent measurements of the vibration acceleration values are performed at the monitoring points on the diesel generator in the course of its operation with the prescribed intervals, with additional measurement of temperature and intensity of an ultrasonic signal at the same monitoring points and determination of the root mean square values of the ultrasonic signal intensity, temperature and vibration acceleration, and the root mean square values of vibration velocity and vibratory displacement are also calculated on the basis of the measured values; the obtained values are presented in the form of matrices, then the obtained root mean square values are normalized; calculation of the co-variation matrices and their singular decomposition are performed in order to determine the eigenvectors and the eigenvalues, then the obtained data are projected on the eigenvector components with formation of clusters corresponding to the measurements at each point within the space of eigenvector components, then the specified interval formed as the range of distance between the previous measurement clusters is determined, and a conclusion is made on absence of any faults in the diesel generator if more than 50% of the current measurement clusters fall within the specified interval, or presence of any malfunctions of the diesel generator if less than 50% of the current measurement clusters fall within the specified interval, or presence of any fault in the diesel generator if more than 50% of clusters are below the specified interval limits.

2. The method for monitoring the technical condition of a diesel generator according to claim 1, **characterized in that** the monitoring points of the diesel generator for installation of vibration sensors are selected on the diesel supports and fastening points, on the diesel case and in the areas close to location of the diesel supports, turbo compressors, water and oil pumps as well as on the generator supports and frame and its bearing blocks.

3. The method for monitoring the technical condition of a diesel generator according to claim 1, **characterized in that** additional monitoring points for measurement of the ultrasonic signal intensity are mainly selected on the cylinders and their high-pressure fuel pumps, the anchor ties of base bearings, the cam shaft sleeve-type bearings, the generator, the water and oil pumps.

4. The method for monitoring the technical condition of a diesel generator according to claim 1, **characterized in that** additional monitoring points for temperature measurement are selected on the generator bearing, the exhaust nozzles of the cylinders, the high-pressure fuel pumps, the inspection hatches, the housings of the diesel cooling water pump, the boost air cooling water pump, the oil pump and the generator.

5. The method for monitoring the technical condition of a diesel generator according to claim 1, **characterized in that** temperature is measured with the use of a thermal imager.

6. The method for monitoring the technical condition of a diesel generator according to claim 1, **characterized in that** the values of vibration acceleration, temperature and ultrasonic signal intensity are measured with the frequency of once per 3 months.

## INTERNATIONAL SEARCH REPORT

| | International application No. |
|---|---|
| | PCT/RU 2020/000637 |

**A. CLASSIFICATION OF SUBJECT MATTER**
G01M 15/04 (2006.01); G01M 15/12 (2006.01)

According to International Patent Classification (IPC) or to both national classification and IPC

**B. FIELDS SEARCHED**

Minimum documentation searched (classification system followed by classification symbols)
G01M 5/00-7/08, 13/00-15/14

Documentation searched other than minimum documentation to the extent that such documents are included in the fields searched

Electronic data base consulted during the international search (name of data base and, where practicable, search terms used)
PatSearch (RUPTO internal), USPTO, PAJ, Esp@cenet, DWPI, EAPATIS, PATENTSCOPE

**C. DOCUMENTS CONSIDERED TO BE RELEVANT**

| Category* | Citation of document, with indication, where appropriate, of the relevant passages | Relevant to claim No. |
|---|---|---|
| A, D | RU 2682839 C1 (FEDERALNOE GOSUDARSTVENNOE BJUDZHETNOE OBRAZOVATELNOE UCHREZHDENIE VYSSHEGO OBRAZOVANIYA "GOSUDARSTVENNY MORSKOI UNIVERSITET IMENI ADMIRALA F.F. USHAKOVA") 21.03.2019 | 1-6 |
| A | RU 2484442 C1 (IVANOV ALEKSANDR VLADIMIROVICH) 10.06.2013 | 1-6 |
| A | RU 2728485 C1 (FEDERALNOE GOSUDARSTVENNOE AVTONOMNOE OBRAZOVATELNOE UCHREZHDENIE VYSSHEGO OBRAZOVANIYA "NATSIONALNY ISSLEDOVATELSKY UNIVERSITET "MOSKOVSKY INSTITUT ELEKTRONNOI TEKHNIKI") 29.07.2020 | 1-6 |
| A | RU 2338609 C1 (OTKRYTOE AKTSIONERNOE OBSCHESTVO "NOVOLIPETSKY METALLURGICHESKY KOMBINAT" (OAO "NLMK")) 20.11.2008 | 1-6 |
| A | US 9778080 B2 (EMERSON ELECTRIC et al.) 03.10.2017 | 1-6 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June 2021 (21.06.2021) | 01 July 2021 (01.07.2021) |

| Name and mailing address of the ISA/ RU | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2640387
- RU 2682839